# EUROPÄISCHE PATENTSCHRIFT

(11) **EP 0 893 195 B1**
(45) Veröffentlichungstag und Bekanntmachung des Hinweises auf die Patenterteilung: **02.05.2002**
(21) Anmeldenummer: 98115795.1
(22) Anmeldetag: 07.08.1996
(51) Int. Cl.: B23Q 1/00, B23Q 11/10

(54) **Werkzeugaufnahme für rundlaufende Zerspanungswerkzeuge**
Tool holder for rotating chip forming tool
Porte-outil pour outil rotatif d'enlèvement de copeaux

(30) Priorität: 08.08.1995 DE 29512745 U; 21.02.1996 DE 29602997 U
(43) Veröffentlichungstag der Anmeldung: 27.01.1999
(62) Teilanmeldung aus: 96929217.6
(73) Patentinhaber: KENNAMETAL INC., Latrobe, PA 15650-0231 (US)
(72) Erfinder: Kammermeier, Dirk, 90547 Stein (DE); Borschert, Bernhard, 90408 Nürnberg (DE)
(74) Vertreter: Tergau & Pohl Patentanwälte

(56) Entgegenhaltungen:
- DE-C- 29 794
- DE-C- 133 433
- DE-C- 4 327 232
- US-A- 2 847 880
- PATENT ABSTRACTS OF JAPAN vol. 7, no. 203 (M-241) [1348], 8. September 1983 -& JP 58 102613 A (INA SEITOU K.K.), 18. Juni 1983

## Beschreibung

Bei der zerspanenden Bearbeitung von insbesondere metallischen Werkstücken tritt das Problem auf, daß das Bohrwerkzeug, etwa ein Bohrer, eine Reibahle oder allgemein ein rundlaufendes Werkzeug (im folgenden wird auf Bohrer Bezug genommen) sich zusammen mit dem Werkstückstoff erhitzt. Insbesondere in der automatischen Serienfertigung ist deshalb eine Kühlschmierung mit einem Kühlschmierstoff (im folgenden Schmierstoff genannt) erforderlich. Bei der sog. Naßbearbeitung wird ein hoher Schmierstoffüberschuß in flüssiger Form in das Bohrloch hineingeleitet. Diese Art der Kühlschmierung ist jedoch mit relativ hohen Anlagekosten und Kosten für die Schmierstoffentsorgung, Reinigung etc. behaftet. Beim Bohren ist es außerdem nicht ohne weiteres möglich, den Schmierstoff in das Bohrerloch hinein zu fördern. Es werden deshalb Schmiersysteme verwendet, bei dem der Schmierstoff mit Hilfe von Fördereinrichtungen über die Spindel einer Bearbeitungsmaschine und wenigstens einem im Bohrer vorhandenen Schmierstoffkanal den jeweiligen Wirkstellen, etwa im Bereich der Bohrerhauptschneiden oder der Spanfläche, zugeführt wird. Bei diesen Schmiersystemen ist aber schon allein deshalb eine relativ große Schmierstoffmenge erforderlich, weil die Versorgungsleitungen, die von der Versorgungseinrichtung zur Bearbeitungsmaschine bzw. zu deren Spindel führen mit Schmierstoff gefüllt werden müssen. Außerdem läßt sich mit herkömmlichen Versorgungseinrichtungen eine genaue Dosierung von geringen Schmierstoffmengen nur schwierig durchführen. Es ist eine Werkzeugaufnahme für kühl- bzw. schmiermittelversorgte Werkzeuge bekannt, in der ein Schmiermittelspeicher integriert ist. Der Speicher ist durch einen in Förderrichtung federbelasteten Kolben druckbeaufschlagt. Nachteil einer solchen Werkzeugaufnahme ist neben der aufwendigen Fertigung vor allen Dingen, daß das im Speicher vorhandene Schmiermittel stets im wesentlichen mit demselben, durch die Feder vorgegebenen Druck beaufschlagt wird. Eine Anpassung des Drucks an unterschiedliche Viskositäten des Schmiermittels oder eine Variierung der in den Wirkbereich des Bohrwerkzeugs geförderten Schmiermittelmenge über eine unterschiedliche Druckbeaufschlagung sind möglich.

Aufgabe der Erfindung ist es eine Werkzeugaufnahme vorzuschlagen, mit der auf technisch einfache Weise eine Mindermengenschmierung mit exakter Dosierung durchführbar ist.

Diese Aufgabe wird durch eine Werkzeugaufnahme nach Anspruch 1 gelöst.

Durch den im Spendebehälter vorhandenen Druck ist eine lageunabhängige Schmierung möglich. Außerdem können höher viskose und solche Schmierstoffe eingesetzt werden, die sich bei den beim Einsatz herschenden Temperaturen nicht ausreichend verflüssigen und ohne Druckanwendung nicht zu den Wirkstellen gelangen würden. Die Schmierstoffmenge bzw. der Schmierstoffstrom kann ganz allgemein ohne größeren technischen Aufwand durch die Größe der Austrittsöffnungen des Bohrwerkzeugs gesteuert werden. Bezogen auf eine bestimmte Bohrwerkzeugdrehzahl läßt sich auf diese Weise ein relativ genauer Schmierstoffstrom festlegen.

Ein Gaspolster der vorgeschlagenen Art kann entweder von vornherein im Spendebehälter vorhanden sein oder erst bei Bedarf erzeugt werden. Dazu ist beispielsweise der Behälter durch einen Trennkolben in einen Schmierstoffraum und in einen Gaserzeugungsraum getrennt. Im Gaserzeugungsraum befindet sich eine Elektrolytflüssigkeit, in die bei Bedarf ein Feststoff eingebracht werden kann, der mit der Elektrolytflüssigkeit unter Gasentwicklung reagiert.

Vorteilhaft ist weiterhin, daß aufgrund des größeren Volumens einer Werkzeugaufnahme ein entsprechend größerer und für längere Bearbeitungszeiträume wirksamer Schmierstoffvorrat geschaffen werden kann als im Bohrwerkzeug selbst. Auch ist diese Art der Schmierstoffversorgung unabhängig von maschinenseitigen Schmierstoffversorgungseinrichtungen, wie Pumpen, Verbindungsleitungen, Drehdurchbrüche etc..

Der in einer Werkzeugaufnahme angeordnete Spendebehälter kann, je nach Bedarf, mit mehr oder weniger viskosen Schmierstoffen befüllt werden. Um insbesondere im Falle von leichtflüssigen Schmierstoffen einen Schmierstoffverlust während der Stillstandszeiten zu verhindern ist es vorteilhaft, wenn die fluidische Verbindung zwischen dem Spendebehälter und dem Schmierstoffkanal des Bohrwerkzeugs mit Hilfe eines insbesondere fliehkraftbetätigten Sperrventils steuerbar ist. Ein Bohrwerkzeug kann somit ausgewechselt werden, ohne daß Schmierstoff aus dem Spendebehälter herausläuft.

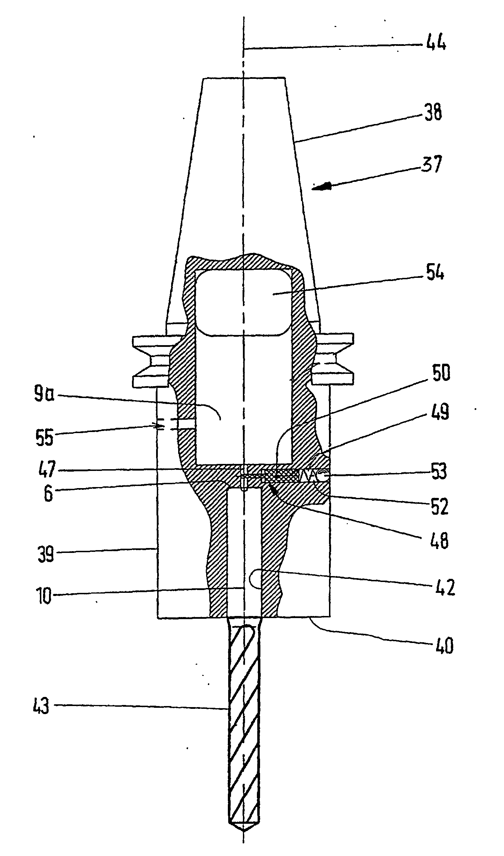

Die Erfindung wird nun anhand eines in der beigefügten Zeichnung dargestellten Ausführungsbeispiels näher erläutert.

In der Abbildung ist eine erfindungsgemäße Werkzeugaufnahme 37 in schematischer Schnittdarstellung gezeigt. Sie weist einen kegelförmigen Haltebereich 38 auf, mit dem sie in eine entsprechende Fixierausnehmung einer Bearbeitungs- oder Werkzeugmaschine (nicht dargestellt) einsetzbar ist. Ein zweiter, sich an den kegelförmigen Bereich 38 anschließender Bereich 39 ist zylinderförmig ausgebildet und weist auf seiner Stirnseite 40 eine Aufnahmebohrung 42 für einen Bohrer 43 auf. Etwa im mittleren Teil der Werkzeugaufnahme 38 und koaxial zur Mittellängsachse 44 der Werkzeugaufnahme 38 ist ein Spendebehälter 9a angeordnet. In dem der Aufnahmebohrung 42 abgewandten Bereich des Spendebehälters 9a ist ein expandierbares, also unter Druck stehendes Gaspolster angeordnet. Der Spendebehälter ist über eine Nachfüllöffnung (55) mit Schmierstoff beschickbar bzw. wiederauffüllbar.

Im Bohrer 43 ist ein zentraler Schmierstoffkanal 10 angeordnet, der auf der schaftseitigen Stirnseite 6 des Bohrers 43 ausmündet. In der Werkzeugaufnahme 38 ist ein Verbindungskanal 47 vorhanden, der sich vom Spendebehälter 9a bis zur Stirnseite bzw. bis zu dem in die Stirnseite 6 des Bohrers 43 mündenden Schmierstoffkanal 10 erstreckt. Der Verbindungskanal 47 ist von einem fliehkraftbetätigten Sperrventil 48 verschlossen, das wie folgt ausgebildet ist: In einer radial angeordneten Aufnahmebohrung 49 ist ein Schieber 50 angeordnet, der in Schließrichtung von einer Druckfeder 52 beaufschlagt ist. Die Druckfeder 52 stützt sich mit ihrem anderen Ende an einer Rastkugel 53 ab. Das Sperrventil 48 arbeitet wie folgt: Wenn sich der Bohrer 43 dreht, wird der Schieber 50 fliehkraftbedingt radial nach außen gegen die Wirkung der Druckfeder 52 bewegt. Er gibt dadurch die Querschnittsfläche des Verbindungskanals 47 zumindest teilweise frei. Der im Spendebehälter 9a unter Druck stehende Schmierstoff wird dann über den Verbindungskanal 47 in den Schmierstoffkanal 10 und letztlich zu den Wirkstellen im Bereich der Bohrerspitze gefördert.

### Bezugszeichenliste

- 6: Stirnseite des Bohrers
- 9a: Spendebehälter
- 10: Schmierstoffkand
- 37: Werkzeugaufnahme
- 38: Haltebereich
- 39: Bereich
- 40: Stirnseite
- 42: Aufnahmebohrung
- 43: Bohrer
- 44: Mittellängsachse
- 47: Verbindungskanal
- 48: Sperrventil
- 49: Aufnahmebohrung
- 50: Schieber
- 51: Schließkugel
- 52: Druckfeder
- 53: Rastkugel
- 54: Luftpolster
- 55: Nachfüllkanal

## Patentansprüche

1. Werkzeugaufnahme zum Einspannen eines Bohrwerkzeugs, mit einem darin integrierten Spendebehälter (9a) für einen Schmierstoff, wobei der Spendebehälter bei eingespanntem Bohrwerkzeug (43) mit wenigstens einem internen Schmierstoffkanal (10) des Bohrwerkzeugs fluidisch verbunden und druckbeaufschlagt ist,
**dadurch gekennzeichnet, daß**
zur Druckbeaufschlagung entweder im Spendebehälter (9a) ein expandierbares Gaspolster angeordnet ist, oder im Spendebehälter (9a) Mittel Zur Erzeugung eines expandierbaren Gaspolsters vorgesehen sind.

2. Werkzeugaufnahme nach Anspruch 1,
**gekennzeichnet durch**
einen wiederbefüllbaren Spendebehälter (9a).

3. Werkzeugaufnahme nach Anspruch 2,
**gekennzeichnet durch**
einen sich von der Außenseite der Werkzeugaufnahme in den Innenraum des Spendebehälters (9a) erstreckenden Nachfüllkanal (55).

4. Werkzeugaufnahme nach einem der Ansprüche 1 bis 3,
**dadurch gekennzeichnet,**
**daß** die fluidische Verbindung zwischen dem Spendebehälter (9a) und dem Schmierstoffkanal (10) mit Hilfe eines fliehkraftbetätigten Sperrventils (48) steuerbar ist.

## Claims

1. Tool holder for clamping a drilling tool, having a dispensing container (9a) integrated therein for a lubricant, the dispensing container, when the drilling tool (43) is clamped, being fluidically connected to at least one internal lubricant passage (10) of the drilling tool and being pressurized, **characterized in that**, for the pressurizing, either an expandable gas cushion is arranged in the dispensing container (9a) or means for producing an expandable gas cushion are provided in the dispensing container (9a).

2. Tool holder according to Claim 1, **characterized by** a refillable dispensing container (9a).

3. Tool holder according to Claim 2, **characterized by** a refill passage (55) extending from the outside of the tool holder into the interior space of the dispensing container (9a).

4. Tool holder according to one of Claims 1 to 3, **characterized in that** the fluidic connection between the dispensing container (9a) and the lubricant passage (10) can be controlled by means of a stop valve (48) actuated by centrifugal force.

## Revendications

1. Porte-outils pour enserrer un outil de perçage, comprenant un récipient distributeur (9a) intégré à l'intérieur pour un lubrifiant, ledit récipient distributeur étant en communication de fluide, lorsqu'un outil de perçage (43) est enserré, avec au moins canal à lubrifiant interne (10) de l'outil de perçage et mis sous pression,
**caractérisé en ce que** pour la mise sous pression, soit on prévoit d'agencer un tampon de gaz expansible dans le récipient distributeur (9a) soit on prévoit dans le récipient distributeur (9a) des moyens pour générer un tampon de gaz expansible.

2. Porte-outils selon la revendication 1, **caractérisé en ce que** le récipient distributeur (9a) est reremplissable.

3. Porte-outils selon la revendication 2, **caractérisé par** un canal de remplissage (55) qui s'étend depuis la face extérieure du porte-outils jusque dans le volume intérieur du récipient distributeur (9a).

4. Porte-outils selon l'une des revendications 1 à 3, **caractérisé en ce que** ladite communication de fluide entre le récipient distributeur (9a) et le canal à lubrifiant (10) est susceptible d'être commandée à l'aide d'une valve d'obturation (48) actionnée sous des forces d'inertie.
